# EUROPÄISCHE PATENTSCHRIFT

(11) **EP 2 511 736 B1**
(45) Veröffentlichungstag und Bekanntmachung des Hinweises auf die Patenterteilung: **17.02.2016**
(21) Anmeldenummer: 11003197.8
(22) Anmeldetag: 15.04.2011
(51) Int. Cl.: G01V 3/10

(54) **Vorrichtung und Verfahren zur Detektion von elektrisch leitfähigen Gegenständen**
Method and device for detecting objects which conduct electricity
Dispositif et procédé de détection d'objets conducteurs d'électricité

(43) Veröffentlichungstag der Anmeldung: 17.10.2012
(73) Patentinhaber: iControls, k.s., 85106 Bratislava (SK)
(72) Erfinder: Schmidt, Ralf Philipp, 67251 Freinsheim (DE)
(74) Vertreter: Weickmann & Weickmann

(56) Entgegenhaltungen:
- EP-A1- 2 045 922
- DE-A1-102004 047 190
- DE-U1- 29 724 862
- DE-U1-202006 004 158
- GB-A- 2 394 298
- US-A1- 2005 253 711

## Beschreibung

Die Erfindung betrifft eine Vorrichtung zur Detektion von elektrisch leitfähigen Gegenständen.

Aus der DE 41 02 542 A1 ist ein induktiver Nährungsschalter bekannt. Dieser induktive Nährungsschalter enthält einen Oszillator, der ein magnetisches Wechselfeld erzeugt und der bei Eindringen eines Auslösers in das Wechselfeld seinen Schwingungszustand ändert, was eine Auswerteschaltung zur Gewinnung eines Schaltsignals zur Ansteuerung eines Lastschalters nutzt. Die erfassbare Änderung des Schwingungszustands ist sowohl von materialtypischen Eigenschaften des Auslösers sowie dessen Abstand und dessen Position relativ zum dem Schalter abhängig. Diese Schalter reagieren somit relativ unspezifisch auf verschiedene Materialien und im Wesentlichen nur auf den Abstand zwischen dem Auslöser und dem Schalter.

Aus der DE 39 34 593 C2 ist ein Sensor bekannt, bei dem an die Primärspule ein dreiecksförmiges Signal angelegt wird, so dass gemäß dem Induktionsgesetz am Ausgang der Sekundärspule ein Rechtecksignal mit der Frequenz des Dreiecksignals erzeugt wird. Diese Variante dient dazu, einen Sensor zu entwerfen, der ein sicheres Signal abgibt. Dies wird durch das kontinuierliche Ansteigen beziehungsweise Abfallen gemäß dem dreiecksförmigen Signal erreicht.

Weiter ist aus der EP 0 936 741 A1 ein induktiver Nährungsschalter bekannt, der eine einzelne Spule verwendet, mit der mittels eines Sendestromimpulses in dem zu erfassenden Körper eine Induktionsspannung erzeugt wird, die einen Strom in dem Körper verursacht, dessen Abklingen nach dem Ende des Stromimpulses in der Spule Spannung induziert, die entsprechend verarbeitet werden kann. Die Sendestromimpulse liegen im Bereich zwischen 100 µs und 200 µs. Bei diesem Verfahren wird ein und dieselbe Spule für das Erzeugen eines Wirbelstroms als auch für das Erfassen des abklingenden Wirbelstroms verwendet. Ein Metallgehäuse für diesen Sensor muss nicht-ferromagnetisch sein und einen relativ hohen spezifischen elektrischen Widerstand aufweisen.

Das Dokument WO 01/71387 A1 zeigt ein elektromagnetisches Zielunterscheidungssystem und ein Verfahren zur Detektion und Identifizierung von Metallen.

Die DE 10 2004 047 190 A1 zeigt einen Detektor zur Ortung metallischer Objekte, bei welchem eine durch zeitlich variable Ströme erregbare Spule über ihr Magnetfeld mit zwei weiteren konzentrischen Spulen induktiv gekoppelt ist. Eine elektronische Schaltung spricht für die Ortung des metallischen Objekts auf die Differenz der Antwortsignale dieser beiden Spulen an.

Aus GB 2 394 298 A ist für die Detektion elektrisch leitfähiger Gegenstände ein magnetischer Sensor mit zwei gleichachsig im Abstand voneinander angeordneten Spulen bekannt, die durch Wechselstrom zu gegensinnig gepolten Magnetfeldern erregt werden. Zwischen den beiden Spulen ist in dem Magnetfeld eine dritte Spule angeordnet, die in Abhängigkeit von dem elektrisch leitfähigen Gegenstand eine Antwort bildet. Eine auf die Antwort der dritten Spule ansprechende elektronische Schaltung detektiert den Gegenstand abhängig von detektierbaren Signaländerungen in der Antwort.

Aus EP 2 045 922 A1 ist ein induktiver Nährungsschalter bekannt, bei welchem mehrere miteinander gekoppelte Spulen von einem Oszillator erregt werden. In einem zu erfassenden, elektrisch leitfähigen Gegenstand induzierte Wirbelströme ändern die Amplitude des den Spulen zugeführten Oszillatorsignals bei Annäherung an die Spulen.

Ein weiterer induktiver Nährungsschalter ist aus DE 20 2006 004 158 U1 bekannt. Der Nährungsschalter basiert auf dem transformatorischen Kopplungsfaktor-Prinzip und umfasst einen Oszillator, der eine Sendespule erregt, sowie zwei im magnetischen Wechselfeld der Sendespule angeordnete Empfangsspulen. Eine elektronische Auswerteschaltung erfasst die Annäherung eines elektrisch leitfähigen Gegenstands abhängig von den Empfangssignalen der Empfangsspulen, wobei die Spulen konzentrisch ineinander angeordnet sind.

Aufgabe der vorliegenden Erfindung ist es, eine Vorrichtung zu schaffen, mit dem spezifische Besonderheiten des zu erfassenden Gegenstands wie beispielsweise Materialeigenschaften, Materialzusammensetzung oder Größe des Gegenstands detektierbar werden und dies vorzugsweise (weitgehend) unabhängig vom Abstand zwischen der Vorrichtung und dem Gegenstand.

Diese Aufgabe wird gelöst mit einer Vorrichtung nach Anspruch 1. Bevorzugte Ausführungsformen sind in den abhängigen Ansprüchen offenbart.

Die Vorrichtung weist zwei oder drei Spulen auf, von denen eine, die zwei Spulenteile umfasst, die im Folgenden ebenfalls als erste und zweite Spule und als zwei Spulen bezeichnet werden, oder zwei zur Erzeugung von Magnetfeldern und eine zur Detektion einer Antwort auf die Erregung in Form eines zeitlich variablen Stromflusses, die im Folgenden als Antwort auf die Erregung bezeichnet wird und beispielsweise in Form einer Induktionsspannung oder Dämpfung ausgeprägt sein kann oder umgekehrt eine zur Erzeugung des Magnetfeldes und eine, die zwei Spulenteile umfasst, die im Folgenden ebenfalls als erste und zweite Spule und als zwei Spulen bezeichnet werden oder zwei zur Detektion einer Antwort auf die Erregung verwendet werden können. Die Vorrichtung weist weiter eine Elektronik auf, die (insbesondere) während, und/oder nach der Versorgung der magnetfelderzeugenden Spule mit einer Erregung in Form eines zeitlich variablen Stromflusses eine Antwort auf die Erregung erfasst. Befindet sich ein elektrisch leitfähiger Gegenstand im Bereich des Magnetfeldes, erzeugt dies so ein detektierbares Signal in der erfassten Antwort auf die Erregung. Je nach Materialeigenschaften und Größe des detektierten Gegenstandes, kann die erfasste Antwort auf die Erregung spezifische Charakteristika aufweisen. Aus diesen kann auch auf das Material des Gegenstandes, die Materialzusammensetzung des Gegenstandes, die Materialeigenschaften des Gegenstandes und/oder die Größe des Gegenstandes zurückgeschlossen werden.

Die erste und zweite Spule kann entgegengesetzt oder gleichsinnig gewickelt sein. Die beiden Spulen können räumlich voneinander getrennt sein. Durch eine entsprechende Verschaltung dieser Spulen können Magnetfelder mit entgegengesetzter Polung erzeugt werden. Die erste und zweite Spule können in Reihe geschaltet sein. Sie können aber auch (unabhängig voneinander) von jeweils einer Stromquelle gespeist sein, vorzugsweise, wenn sie nicht zwei Teile einer Spule umfassen.

Auf beiden Seiten des Spulensystems (umfassend die erste, zweite und dritte Spule) erzeugen elektrisch leitfähige Gegenstände Signalformen mit entgegengesetztem Vorzeichen, so dass sich gleiche Effekte auf beiden Seiten eliminieren. Hierbei werden als Front und Rückseite jeweils die Seiten bezeichnet, die an dem der Außenseite zugewandten Ende der ersten und zweiten Spule liegen.

Die Erregung im Form eines zeitlich variablen Stromflusses, die im Folgenden auch als Erregung bezeichnet wird, kann als Pulspaket beliebiger Form und/oder als eine Sinusform ausgebildet sein. Sie kann auch einen periodischen Puls und/oder ein Mehrfachpulspaket umfassen. Weiterhin kann sie auch als eine periodische Schwingungsform und/oder eine aperiodische Pulsfolge ausgebildet sein. Weiterhin kann sie so ausgebildet sein, dass sie nicht sprunghaft ansteigt und abfällt und so beispielsweise nicht als Rechteckspuls ausgebildet sein kann. Auch kann die Erregung in einer Form vorhanden sein, dass sie einen sprunghaften Anstieg aufweist, jedoch kein sprunghaftes Abfallen zeigt oder alternativ keinen sprunghaften Anstieg und ein sprunghaftes Abfallen zeigt.

Die Erregung in Form eines zeitlich variablen Stromflusses weist vorzugsweise einen sprunghaften Anstieg und/oder ein sprunghaftes Abfallen auf wie beispielsweise bei einem Rechteckpuls. In einer bevorzugten Ausführungsform weist die Erregung in Form eines variablen Stromflusses die Form eines Rechteckpulses auf und hat die Dauer zwischen 0,1 ns und 1 ms wie etwa zwischen 1 µs und 50 µs. In anderen Ausführungsformen kann die Erregung in Form eines zeitlich variablen Stromflusses als kurzer Stromimpuls mit hoher Stromstärke wie beispielsweise einem Dirac-Stoss ausgeprägt sein oder einen solchen umfassen.

Je kürzer die Erregung in Form eines variablen Stromflusses ist bzw. je kürzer der Anstieg oder Abfall ist, desto höherfrequenter und damit breitbandiger ist das Anregungsspektrum für die Antwort auf die Erregung. Durch Anteile mit verschiedenen Frequenzen können insbesondere verschiedene Größenskalen des Gegenstandes unterschieden werden, als auch auf frequenzspezifische Materialeigenschaften und damit auf die Zusammensetzung des elektrisch leitfähigen Gegenstandes geschlossen werden. Die Anstiegszeit in der beispielsweise 90% des maximalen Stromwerts (des sprunghaften Anstiegs) erreicht werden kann und/oder die Abfallzeit, in der der Strom vom Ausgangswert des sprunghaften Abfalls auf 10% davon abfällt kann kürzer als 0,2 oder 0,1 µs sein.

Die durch die erste und zweite Spule erzeugte Wirkung der Antwort auf die Erregung in der dritten Spule oder die durch die dritte Spule erzeugte Wirkung der Antwort auf die Erregung in der ersten und zweiten Spule können sich ganz aufheben oder heben sich zumindest teilweise auf.

Vorzugsweise geschieht dies zumindest zu 90% oder 99%. Die Kompensationswirkung kann so sein, dass bei Nichtvorhandensein eines zu detektierenden elektrisch leitfähigen Gegenstandes die erfasste Antwort auf die Erregung im Wesentlichen Null ist. Dies führt zu einer hohen Sensitivität der Vorrichtung zur Detektion, da jedes Vorhandensein eines elektrisch leitfähigen Gegenstandes eine von Null verschiedene Antwort auf die Erregung oder eine von einer Referenzantwort auf die Erregung verschiedene Antwort auf die Erregung ergibt. Dies geschieht vorzugsweise so, dass sich Einflüsse an Front und Rückseite kompensieren. Die Kompensationswirkung kann durch eine symmetrische Anordnung der Spulen erreicht werden. Liegt z.B. die dritte Spule symmetrisch zwischen der ersten und der zweiten Spule, so können sich die erzeugten Antworten auf die Erregung in Form eines zeitlich variablen Stromflusses in der ersten und zweiten Spule aufheben. Aber auch für den Fall, dass die drei Spulen der Vorrichtung nicht symmetrisch angeordnet sind, kann beispielsweise die Antwort auf die Erregung bei Nichtvorhandensein eines elektrisch leitfähigen Gegenstandes durch weitere Korrekturfaktoren, wie beispielsweise weitere Spulen oder das Einbringen von anderen leitfähigen Gegenständen in die Vorrichtung angepasst werden, so dass die Wirkung der Antwort auf die Erregung so eingestellt wird, dass die zuvor beschriebene Kompensätionswirkung erzeugt wird. Auch das Einstellen der Antwort auf die Erregung auf Null bei Anwesenheit eines bestimmten Gegenstandes kann so erfolgen.

Falls die in der ersten und zweiten Spule erzeugte Antwort auf die Erregung erfasst wird, so sind diese beiden Spulen vorzugsweise so verschaltet, dass die Antwort auf die Erregung sich zumindest teilweise, vorzugsweise zu mindestens 90% oder 99%, kompensieren, wobei vorzugsweise die Kompensation so erfolgt, dass bei Nichtvorhandensein eines zu detektierenden elektrisch leitfähigen Gegenstandes sich die beiden Antworten auf die Erregung im Wesentlichen zu Null ergänzen. Dies kann beispielsweise auf die Arten geschehen, die zuvor im Zusammenhang mit der Kompensationswirkung bezüglich der Antwort auf die Erregung in der dritten Spule beschrieben sind.

Vorzugsweise wird der Verlauf der erzeugten Antwort auf die Erregung zu verschiedenen Zeiten erfasst (zeitabhängige Erfassung), während und/oder nach der Erregung in Form eines zeitlich variablen Stromflusses. So können für jede Erregung in Form eines zeitlich variablen Stromflusses beispielsweise mehr oder weniger als 5, mehr oder weniger als 10, mehr oder weniger als 100, mehr oder weniger als 1000 oder mehr oder weniger als 10.000 oder mehr oder weniger als 100.000 oder 100.000 Messwerte erfasst werden.

Gemäß der Erfindung werden in dem zeitabhängig erfassten Verlauf der Antwort auf die Erregung ein, zwei, drei oder mehr Maximal- und/oder Minimal- und/oder Wendepunkte und/oder Nulldurchgänge (charakteristische Punkte) und/oder andere Punkte der erfassen Antwort auf die Erregung bestimmt. Als Kriterium zur Wertung der Detektion eines elektrisch leitfähigen Gegenstandes kann beispielsweise der zeitliche Abstand zwischen Maximal- und/oder Minimal- und/oder Wendepunkt und/oder einem Nulldurchgang und/oder einem anderen Punkt bestimmt werden. Diese Signale haben den Vorteil, dass sie weitgehend unabhängig von dem Abstand zwischen der Vorrichtung und dem zu detektierenden elektrisch leitfähigem Gegenstand sind.

Auch ist es möglich, dabei oder alternativ die Antwort auf die Erregung zu einem oder mehreren verschiedenen Zeitpunkten zu messen. Hierbei kann es sich um vorbestimmte Zeitpunkte handeln, so dass in bestimmtem zeitlichen Abstand zu einer charakteristischen Zeit, wie beispielsweise dem Aussenden der Erregung, die Antwort auf die Erregung gemessen werden kann. Dies kann beispielsweise die Messung vereinfachen, da in einigen Ausführungsformen somit nur die Antwort auf die Erregung zu den charakteristischen Zeitpunkten gemessen werden muss und nicht die Antwort auf die Erregung zu allen Zeitpunkten. Hierbei können die Zeitpunkte äquidistant und/oder nicht-äquidistant gewählt sein. In einigen Ausführungsformen ist es möglich, zu mehreren Zeitpunkten, die in vorherbestimmten zeitlichen Abständen liegen, zu messen und/oder nur zu Zeitpunkten in vorherbestimmten Zeitintervallen zu messen. So kann beispielsweise bei geschickter Wahl der Zeitpunkte allein durch die Betrachtung des Vorzeichens der Antwort auf die Erregung eine Aussage über das Material getroffen werden. Beispielsweise kann bei geschickter Wahl der Zeitpunkte, zu denen gemessen wird, durch die Bestimmung des Vorzeichens derAntwort auf die Erregung eine Unterscheidung von Materialien wie Stahl, Edelstahl und Buntmetall oder Hartmetall mit unterschiedlichen Korngrößen erfolgen. Auch über die Betrachtung der Antwort auf die Erregung zu verschiedenen Zeitpunkten können Rückschlüsse auf den untersuchten Gegenstand getroffen werden. Dabei kann beispielsweise die Dämpfung der Antwort auf die Erregung oder z.B. durch Fouriertransformation eine Betrachtung des Frequenz- und Phasenspektrums betrachtet werden.

Die Signalhöhe wird zwar bei verschiedenen Abständen des untersuchten Gegenstandes zur Vorrichtung verschieden sein, jedoch sind die Zeiten beispielsweise zwischen Maximal-/Minimal- und Nulldurchgang (weitgehend) abstandsunabhängig. Es können auch für eine Erregung in Form eines zeitlich variablen Stromflusses mehrere charakteristische Punkte bestimmt werden wie etwa ein Maximum und ein Minimum oder mehrere Maxima oder mehrere Minima oder mehrere Nulldurchgänge. Dabei können mehrere zeitliche Abstände zwischen mehreren (in diesem Fall mindestens drei) solcher charakteristischen Punkte bestimmt werden und/oder die Zeiten zwischen dem Start der Erregung in Form eines zeitlich variablen Stromflusses und den mehreren charakteristischen Punkten.

Auch die Dauer vom Beginn einer Erregung in Form eines zeitlich variablen Stromflusses bis zum Erreichen eines Maximal-/Minimalwerts oder eines Nulldurchgangs oder eines Wendepunkts oder eines anderen Punktes können zur Charakterisierung des detektierten elektrisch leitfähigen Gegenstandes herangezogen werden.

Auch eine Unterscheidung zwischen kleinen und großen Gegenständen ist mit derartigen Kriterien möglich. So können beispielsweise durch Schweißspritzer entstandene Metallpartikel unterschieden werden von großen elektrisch leitfähigen Gegenständen wie beispielsweise Metallplatten, um eine Fehlfunktion der Sensoren beziehungsweise eine Verschmutzung derselben zu erkennen.

Zusätzlich oder Alternativ zu solchen zeitlich bestimmten Charakteristika können auch andere Charakteristika wie zum Beispiel Absolutwerte bei einem Maximal-/Minimal- oder Wendepunkt und/oder Vorzeichen zu bestimmten Zeitpunkten herangezogen werden. In einigen Ausführungsformen können auch die Differenzen von zu verschiedenen, vorzugsweise vorher bestimmten Zeitpunkten gemessenen Antworten auf die Erregung als Charakteristika herangezogen werden.

Auch ist es möglich, zusätzlich oder nur Änderungen der Antwort zu erfassen, was Rückschlüsse darauf zulassen kann, aus welcher Richtung (frontal oder seitlich) sich ein elektrisch leitfähiger Gegenstand der Sensorfläche annähert. Hierbei bezeichnet die Sensorfläche typischerweise die Frontfläche des Sensors.

Im Bereich der ersten oder zweiten Spule können ein, zwei oder mehr metallisch leitfähige Gegenstände als Bestandteil der Vorrichtung vorgesehen sein. Mit diesen/diesem ist ein Abgleichen der erzeugten Antwort auf die Erregung möglich und/oder auch das Vorgeben eines Referenzgegenstandes. Zum Abgleichen der erzeugten Antwort auf die Erregung kann beispielsweise eine Schraube oder Stift vorgesehen sein, die mehr oder weniger stark in den Bereich eines Magnetfelds hereinragt und so beispielsweise zum Nullabgleich der erzeugten Antwort auf die Erregung eingesetzt werden kann. Für den Nullabgleich kann die Schraube oder der Stift verstellt werden, bis ein gewünschtes Signal (also z.B. ein auf Null abgeglichenes Signal) erzeugt wird. Für den Abgleich oder den Nulllabgleich ist vorzugsweise kein zu detektierender elektrisch leitfähiger Gegenstand vorhanden. Bei Vorhandensein einer elektrisch leitfähigen Störkontur (wie beispielsweise bedingt durch metallische Maschinenteile, in oder an die der Sensor ein-/angebaut wird), kann der Einfluss der metallischen Störkontur mit dem Nullabgleich reduziert bzw. eliminiert werden. Dadurch können Sensoren gleicher Bauart für verschiedene Einsatzzwecke (Einbauten) hergestellt werden, die dann je nach Verwendung bzw. ja nach der Störkontur dennoch auf Null abgeglichen werden können. Dies kann auch automatisch durch teach-in geschehen, indem die Antwort oder deren charakteristischen Merkmale mit der Störkontur gespeichert werden und man dann die Abweichung dazu erfasst.

Auch kann mit einem solchen Gegenstand ein Referenzgegenstand geschaffen werden, so dass bei Vorhandensein eines identischen oder sehr ähnlichen zu detektierenden elektrisch leitfähigen Gegenstands ein Nullsignal erzeugt wird. Dies ist beispielsweise insbesondere für die Erkennung von bestimmten Münzen vorteilhaft. Nur dann, wenn der zu detektieren de elektrisch leitfähige Gegenstand mehr oder weniger identisch mit dem vorgegebenen Referenzgegenstand ist, ergibt sich bei Anlegen der Erregung in Form eines zeitlich variablen Stromflusses ein Nullsignal beziehungsweise ein vorbekanntes Signal und bei Abweichen des detektierten elektrisch leitfähigen Gegenstandes von dem Referenzgegenstand ergibt sich ein von Null verschiedenes beziehungsweise von dem vorbekannten Signal abweichendes Signal, das entsprechend ausgewertet werden kann, um zu detektierende elektrisch leitfähige Gegenstände, also insbesondere Münzen, zu diskriminieren. Hierbei kann die erzeugte Antwort auf die Erregung zu verschiedenen Zeiten erfasst werden oder auch nur zu einer bestimmten Zeit nach Anlegen oder Abschalten der Erregung in Form eines zeitlich variablen Stromflusses.

Falls ein Referenzgegenstand als Bestandteil der Vorrichtung vorgesehen ist, so kann ein Abgleich oder Nullabgleich mittels Schraube oder Stift oder eines zum Abgleichen geeigneten Gegenstandes erfolgen, sofern ein zu detektierender elektrischer leitfähiger Gegenstand vorhanden ist, der identisch zu den Referenzgegenstand ist und in der Testposition für zukünftige zu detektierende Gegenstände angeordnet ist.

Statt einer Münze können auch andere elektrisch leitfähige Gegenstände mit Referenzgegenständen verglichen werden. Dies betrifft beispielsweise solche Gegenstände, die abnutzen oder verschleißen und deren Abnutzungsgrad oder Verschleißzustand erfasst werden soll. Dazu kann ein nicht abgenutzter oder nichtverschlissener Gegenstand mit einem zu untersuchenden Gegenstand verglichen werden. So können beispielsweise Elektrodenkappen, die auf die Elektroden eines Schweißgeräts aufgesetzt werden und von Zeit zu Zeit beispielsweise durch Fräsen gesäubert werden, wodurch sie sich abnutzen, ausgemessen werden, wodurch der Abnutzungsgrad bestimmt wird. Auch das Auffinden von Materialfehlern wie beispielsweise Rissen im Material, kann so erfolgen.

Zur Beeinflussung der erzeugten Antwort auf die Erregung können auch ein oder mehrere weitere Spulen vorgesehen sein, die beispielsweise zur Erzeugung eines Nullabgleichs dienen können. Die Spulen können mit der ersten und/oder zweiten Spule in Reihe oder parallel geschaltet sein oder getrennt z. B. an eine Stromquelle angeschlossen oder über einen Widerstand oder eine Schaltung kurzgeschlossen sein.

Die dritte Spule kann auch zweiteilig ausgeführt sein, wobei die dritte Spule dann zwei Spulenteile umfasst, von denen beispielsweise einer der ersten und der andere der zweiten Spule zugeordnet ist. Dabei können die beiden Spulenteile auf einen gemeinsamen oder auch jeder auf einen einzelnen Spulenkörper gewickelt sein. Die beiden Spulenteile sind beispielsweise in Reihe geschaltet. Die dritte Spule kann jedoch auch einteilig ausgeführt sein, also beispielsweise auf einen Spulenkörper gewickelt sein.

In einigen Ausführungsformen können die erste und zweite Spule eine gemeinsame Achse aufweisen, deren Achse mit der Achse der dritten Spule zusammenfällt, wobei optional die dritte Spule mittig zwischen der ersten und zweiten Spule angeordnet ist. Alternativ kann die Achse der dritten Spule parallel versetzt oder nicht parallel zur gemeinsamen Achse oder den Achsen oder einer der Achsen der beiden ersten Spulen liegen.

Vorzugsweise umfasst die Vorrichtung ein Metallgehäuseteil oder ein Vollmetallgehäuse. Damit ist es möglich, den Sensor auch in Umgebungen mit einer aggressiven Atmosphäre wie beispielsweise säure- oder laugenhaltigen Dämpfen einzusetzen.

Der Metallgehäuseteil bzw. das Vollmetallgehäuse können aus beliebigem Edelstahl oder auch Buntmetall gefertigt sein. Die Detektion ist durch Edelstahl oder auch durch Buntmetall hindurch möglich, wobei keine Einschränkung auf z.B. hochohmige Metalle besteht. Die Frontfläche des Sensors, also diejenige Fläche, die dem zu detektierenden Gegenstand bzw. dessen Erkennungsposition zugewandt ist, kann aus jedem Edelstahl oder aus Buntmetall gefertigt sein. Auch durch solche Materialien hindurch ist die Detektion von elektrisch leitfähigen Gegenständen möglich. Je nach Anwendung können aber die einen oder die anderen Metalle als Gehäuse(teil) bevorzugt sein, wobei die Auswahl des Metalls von der Art der Detektion abhängen kann und auch von den Umgebungsbedingungen des Sensors (umgebende Gase oder Flüssigkeiten, Temperatur; Druck, etc.) beispielsweise eignet sich das Material CuCrZr in Applikationen bei denen Schweißspritzer die Sensorfläche verunreinigen. An CuCrZr bleiben diese nicht haften.

Die Vorrichtung kann insbesondere als Nährungsschalter ausgebildet sein oder zur Erkennung von verschiedenen Materialien, zur Münzerkennung oder zur Erkennung des Abnutzungsgrads oder des Verschleißes von Gegenständen. Als Nährungsschalter kann die Vorrichtung unterbündig eingebaut werden, da die erkannten Signale von dem Schaltabstand unabhängig sein können. Ein unterbündiger Einbau erlaubt einen guten Schutz der Vorrichtung gegen Beschädigung. Frontflächen mit großen Dicken bis 7mm können vorteilhaft sein, damit der Sensor als Anschlagfläche dienen kann, mit dem Vorteil, dass die Positioniergenauigkeit wesentlich verbessert wird.

Erfindungsgemäß kann somit auch eine Vorrichtung wie beispielsweise eine Maschine vorgesehen sein, die eine Vorrichtung zur Detektion von elektrisch leitfähigen Gegenständen umfasst, die unterbündig eingebaut ist.

Vorzugsweise ist die Vorrichtung so ausgebildet, dass Änderungen eines Empfangssignals erfasst werden können, wobei durch die bestimmte Charakteristik dieser Änderung Materialfehler zu erkennen sein können. So können beispielsweise Risse im Material erkannt werden.

In bevorzugten Ausführungsformen kann die Elektronik der Vorrichtung die Antwort auf die Erregung zu vorzugsweise vorgegebenen charakteristischen Zeitpunkten erfassen. Die Elektronik kann dann die gemessenen Werte auswerten und auch das Ergebnis ausgeben. Dies kann beispielsweise auf einem Display, durch andere optische Signale, beispielsweise Lämpchen, akustische Signale oder Ähnliches geschehen. Eine Auswertung der Messwerte kann dabei unter Verwendung eines vorzugsweise vorgegebenen Auswertschemas und/oder hinterlegten Auswertkriterien erfolgen, in dem oder denen auch die optional äquidistant oder nicht-äquidistanten liegenden charakteristischen Zeitpunkte vorgegeben sein können.

In weiteren Ausführungsformen kann die zuvor beschriebene Elektronik zusätzlich oder stattdessen auch weitere Messungen durchführen wie beispielsweise die Ermittlung des Zeitpunktes eines Maximums und/oder Minimums und/oder Nulldurchgangs und/oder Wendepunkts und/oder eines anderen Punkts der erzeugten Antwort auf die Erregung und diese Messwerte bei der Auswertung berücksichtigen. Die Auswertung kann hierbei ebenfalls beispielsweise durch das oder ein vorzugsweise vorgegebenes Auswertschema und/oder hinterlegte Auswertkriterien erfolgen.

Das vorgegebene Auswertschema und/oder die hinterlegten Auswertkriterien können automatisch zu einer Klassifikation führen. Die Klassifikation kann beispielsweise die Klassifikation eines untersuchten Metalls auf seine Zusammensetzung (z.B. Stahl, Edelstahl oder Buntmetall) sein oder aber zu einer Klassifikation führen derart, dass ein untersuchter Gegenstand als in Ordnung oder als zu beanstanden klassifiziert wird. Das Ergebnis der Klassifikation kann ausgegeben bzw. angezeigt werden.

Bei dem Verfahren zur Detektion von elektrisch leitfähigen Gegenständen wird eine Erregung in Form eines zeitlich variablen Stromflusses an eine erste und eine zweite Spule angelegt, wobei diese Magnetfelder mit entgegengesetzter Polung erzeugen, wodurch die in einer dritten Spule erzeugte Antwort auf die Erregung erfasst wird.

Stattdessen ist es auch möglich, eine Erregung in Form eines zeitlich variablen Stromflusses an die dritte Spule anzulegen und die Erfassung der Antwort auf die Erregung in der ersten und zweiten Spule vorzunehmen. Die Antwort auf die Erregung wird vorzugsweise in einem Zeitbereich während und/oder nach dem Anlegen der Erregung in Form eines zeitlich variablen Stromflusses zur Detektion des elektrisch leitfähigen Gegenstandes erfasst. Das Auswerten der erfassten Antwort kann dabei beispielsweise ein Auswerten einer erzeugten Spannung und/oder ein Auswerten im Frequenzbereich umfassen. Ein Auswerten im Frequenzbereich kann beispielsweise nach einer FFT oder einer normalen Fouriertransformation der Antwort auf die Erregung an den so gewonnenen Daten durchgeführt werden. Die Erregung kann einen sprunghaften Anstieg oder ein sprunghaftes Abfallen wie beispielsweise in Form eines Rechteckpulses umfassen.

Besondere Ausführungsformen der Erfindung werden anhand der beiliegenden Figuren erläutert. Dabei zeigt:
- Figur 1: verschiedene Möglichkeiten der Verschaltung der ersten, zweiten und dritten Spule;
- Figur 2: die erzeugten Magnetfelder;
- Figur 3: eine schematische Darstellung der Vorrichtung;
- Figur 4: Strom- und Spannungsverläufe;
- Figur 5: eine schematische Darstellung der Magnetfelder bei Vorhandensein eines elektrisch leitfähigen Gegenstandes;
- Figur 6: eine bevorzugte Variante der Vorrichtung in schematischer Darstellung und
- Figur 7a, 7b: eine alternative Bauform der Vorrichtung
- Figur 8: eine schematische Darstellung einer Sensorfläche der Vorrichtung.

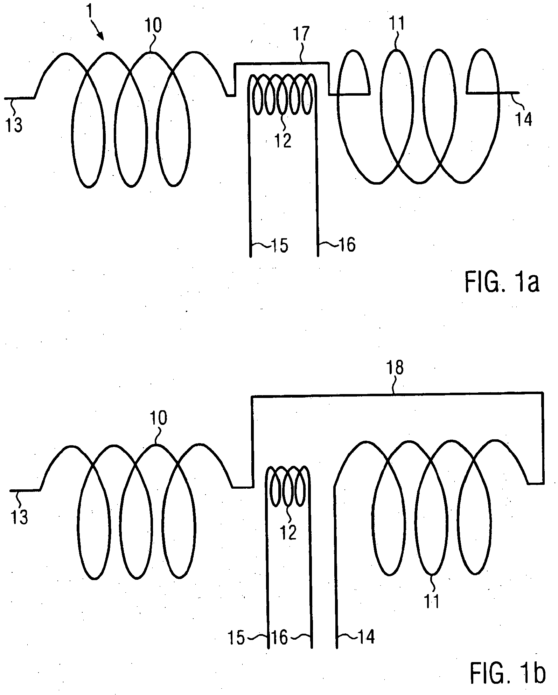

In Figur 1a ist eine Vorrichtung 1 zur Detektion eines elektrisch leitfähigen Gegenstandes schematisch gezeigt. Gezeigt ist eine erste Spule 10 und eine zweite Spule 11, die über die Verschaltung 17 miteinander in Reihe geschaltet sind. Die beiden Spulen sind gegensinnig gewickelt, so dass ein Strom, der von dem Anschluss 13 zu dem Anschluss 14 fließt, einmal ein nach rechts orientiertes Magnetfeld und einmal ein nach links orientiertes Magnetfeld erzeugt. Die erste und zweite Spule können auch als zwei Spulenteile, einer Spule ausgebildet sein.

In dem Bereich zwischen den beiden Spulen 10 und 11 ist eine weitere Spule 12 angeordnet, mit der eine erzeugte Antwort auf die Erregung erfasst werden kann. Diese kann zwischen den Anschlüssen 15 und 16 abgegriffen werden.

Die Spule 12 ist hier in dem Bereich angeordnet, der von den Magnetfeldern, die durch die Spule 10 und 11 erzeugt werden können, durchsetzt wird. Die Spulen 10, 11 und 12 können eine gemeinsame Spulenachse aufweisen und/oder können auf einem gemeinsamen oder getrennten Spulenkörpern aufgewickelt sein. In einigen Ausführungsformen kann die Spule 12 versetzt zur gemeinsamen Achse der Spulen 10 und 11 angeordnet sein, so dass die Spulenachsen der Spulen 10 und 11 und der Spule 12 parallel liegen. In anderen Ausführungsformen ist die Achse der Spule 12 nicht parallel zu der gemeinsamen Achse oder den Achsen der Spulen 10 und 11.

In Figur 1b ist eine Variante gezeigt, bei der die Spulen 10 und 11 gleichsinnig gewickelt sind jedoch durch eine andere Verschaltung 18 der Strom in den beiden Spulen in verschiedenen (entgegengesetzten) Richtungen fließt, so dass auch hier Magnetfelder mit entgegengesetzter Polung erzeugt werden, falls ein Strom von Anschluss 13 zum Anschluss 14 fließt. Die Spulen können unabhängig voneinander an eine Stromversorgung angeschlossen sein. Dabei sind sie dann nicht in Reihe geschaltet. Auch hier können die erste und zweite Spule als zwei Spulenteile einer Spule ausgebildet sein.

Die Spule 12 ist hier ebenfalls in dem Bereich angeordnet, der von den Magnetfeldern, die durch die Spule 10 und 11 erzeugt werden können, durchsetzt wird. Die Spulen 10, 11 und 12 können eine gemeinsame Spulenachse aufweisen und/oder können auf einem gemeinsamen oder getrennten Spulenkörpern aufgewickelt sein. In einigen Ausführungsformen kann die Spule 12 versetzt zur gemeinsamen Achse der Spulen 10 und 11 angeordnet sein, so dass die Spulenachsen der Spulen 10 und 11 und der Spule 12 parallel liegen. In anderen Ausführungsformen ist die Achse der Spule 12 nicht parallel zu der gemeinsamen Achse oder den Achsen der Spulen 10 und 11.

Die Anzahl der Windungen in Figur 1a und 1b ist lediglich schematisch. Vorzugsweise ist die Anzahl der Windungen der Spulen 10 und 11 identisch oder variiert um nicht mehr als 5 % oder 1 %. Es können aber auch Varianten vorgesehen sein, bei denen sich die Wicklungszahlen um bis zu 50 % oder 80 % unterscheiden. Der Einfluss auf die generierten Signale kann durch entsprechende elektronische Kompensation oder durch einen entsprechenden Nullausgleich oder durch Unterschiede in den Windungszahlen der einzelnen Spulen oder Spulenteilen ausgeglichen werden.

Statt einen Strom an die Anschlüsse 13 und 14 zu legen, kann auch ein Strom zum Erzeugen eines Magnetfeldes an die Anschlüsse 15 und 16 der Spule 12 gelegt werden. In diesem Fall kann eine Antwort auf die Erregung zwischen den Anschlüssen 13 und 14 abgegriffen werden. Für den Fall, dass das Magnetfeld der Spule 12 sich ungehindert und symmetrisch ausbreiten kann, wird die Antwort auf die Erregung an den Anschlüssen 13 und 14 sich zu Null ergeben aufgrund der gegensinnigen Wicklungen in Figur 1a oder der gegensinnigen Schaltung in Figur 1b.

Die in den Spulen 10 und 11 erzeugte Antwort auf die Erregung kann auch unabhängig voneinander erfasst werden. Dabei würde die Verschaltung 17 oder 18 wegfallen und die Antwort auf die Erregung der beiden Spulen separat für jede Spule abgegriffen. Die jeweiligen Anschlüsse der beiden Spulen können einer Differenzschaltung zugeführt werden, die die Differenz der Antworten auf die Erregung als Ausgangssignal aufweist bzw. verstärkt, wie beispielsweise in Form eines Differenzverstärkers.

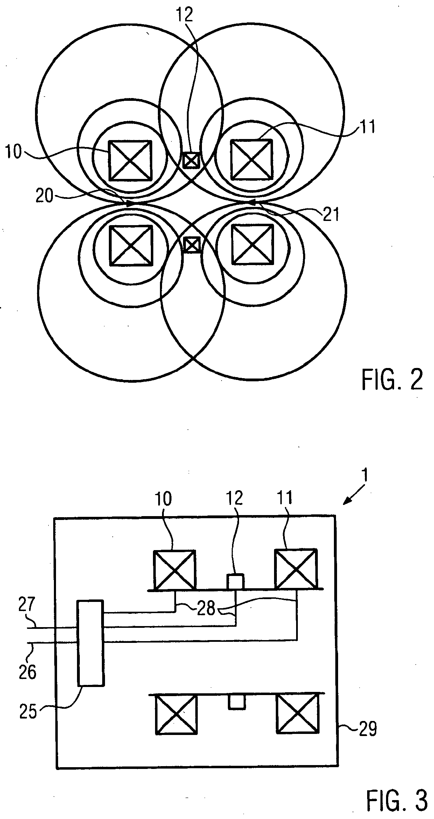

In Figur 2 ist die Vorrichtung 1 im Schnitt gezeigt. Zwischen den beiden Spulen 10 und 11 ist die Spule 12 angeordnet. In Figur 2 ist das durch die Spule 10 erzeugte Magnetfeld 20 dargestellt sowie das durch die Spule 11 erzeugte Magnetfeld 21, falls durch diese Spulen Strom geschickt wird.

Wie in Figur 2 zu erkennen, ist das Magnetfeld dieser beiden Spulen entgegengesetzt, so dass sich beim Erzeugen dieser Magnetfelder ohne weitere Einflüsse in der Spule 12 eine zu Null ergebende Antwort auf die Erregung oder in einigen Ausführungsformen eine teilkompensierte Antwort auf die Erregung einstellt.

In Figur 3 ist der Aufbau einer Vorrichtung 1 schematisch dargestellt. Neben den Spulen 10, 11 und 12 ist eine Elektronik 25 dargestellt, die die Spulen mit entsprechenden Anschlüssen 28 entweder mit Strom versorgt oder die entsprechenden Antworten auf die Erregung abgreifen kann.

Die Elektronik 25 kann mit externen Anschlüssen 26, 27 verbunden sein Diese können zum Beispiel zur Stromversorgung der Vorrichtung 1 beziehungsweise der Elektronik 25 dienen oder zum Ausgeben eines Messsignals.

Die Spulen 10, 11 und 12 können auf einen Spulenkörper aufgewickelt sein, der nicht magnetisch ist oder auch weichmagnetisch ist, wie beispielweise ein Ferritkern. Sie können auch auf mehrere Spulenkörper aufgewickelt sein. In einigen Ausführungsformen ist es auch möglich, dass zwei oder mehr Spulen auf einen gemeinsamen Spulenkörper aufgewickelt sind und/oder Teile von einer Spule auf einem gemeinsamen Spulenkörper mit einer weiteren Spule aufgewickelt sind, und/oder teilweise oder gesamt als Multilayer-Leiterplatte ausgeführt sind

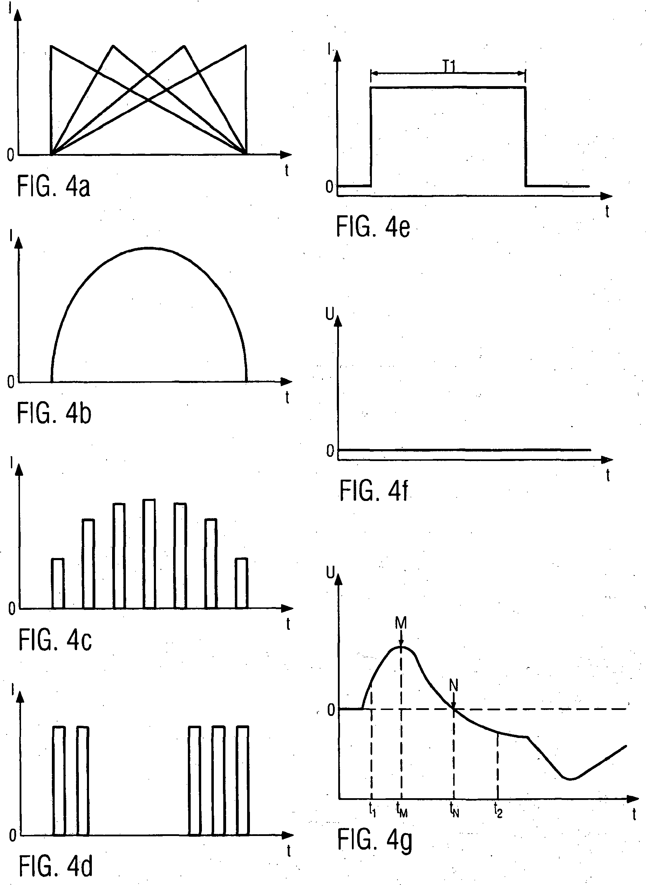

In Figur 4 ist ein Beispiel für den Strom- und Spannungsverlauf dargestellt. In Figuren 4a - 4e sind verschiedene mögliche Siromverläufe gezeigt. Mögliche Verläufe der Erregung durch einen zeitlich variablen Stromfluss umfassen dabei linear ansteigende und wieder linear abfallende Strompulse, wie in Fig. 4a gezeigt. In Fig. 4a sind dabei mehrere Strompulse sichtbar. Bei einigen Strompulsen kann der Anstieg abrupt und der Abfall weniger schnell sein, auch Varianten, in denen der Anstieg und der Abfall gleich große oder ähnliche Steigung haben oder in denen der Anstieg zeitlich linear und der Abfall abrupt sind, können in einigen Ausführungsformen vorhanden sein. In weiteren Ausführungsformen kann der Verlauf der Erregung in Form eines zeitlich variablen Stromflusses die Form von einem negativen Parabelabschnitt mit glattem Anstieg und Abfall (Fig. 4b), von mehreren Rechteckspulsen mit verschiedenen Stromstärken (Fig. 4c) und von mehreren Rechteckspulsen mit gleicher Stromstärke (4d) sein. Die einzelnen Strompulse können dabei äquidistant (Fig. 4c) oder nicht äquidistant (Fig. 4d) sein. In Figur 4e sind beispielhaft ein rechteckiger Stromimpuls gezeigt, bei dem während der Zeit T1 ein Strom vorgegebener Stärke fließt. In anderen Ausführungsformen kann die Erregung in Form eines zeitlich variablen Stromflusses auch Pulspakete, bei denen die Polarität des Stromimpulses variiert wird umfassen oder als solche ausgebildet sein.

Diese Erregungen in Form von zeitlich variablen Stromflüssen können beispielsweise zwischen den Anschlüssen 13 und 14 der Spulenanordnung in Figur 1a und 1b oder auch zwischen den Anschlüssen 15 und 16 der Figur 1 a und 1 b fließen.

Sofern kein zu detektierender elektrisch leitfähiger Gegenstand vorhanden ist, kann sich eine messbare Antwort auf die Erregung, hier beispielhaft eine Induktionsspannung, ergeben, wie sie in Figur 4f dargestellt ist, nämlich ein durchbleibendes Nullsignal, das von der Erregung in Form eines zeitlich variablen Stromflusses unbeeinflusst ist.

Bei Vorhandensein eines elektrisch leitfähigen Gegenstandes ergibt sich eine Antwort auf die Erregung, in diesem Fall eine Induktionsspannung, wie sie beispielhaft in Figur 4g dargestellt ist. Während oder nach der Erregung in Form eines zeitlich variablen Stromflusses in der Zeit T1 kann die gemessene Antwort auf die Erregung, in diesem Fall die Induktionsspannung U ein zeitlich charakteristisches Profil aufweisen. Dieses Profil kann beispielsweise durch die Bestimmung eines Maximums M und eines Nulldurchgangs N oder auch weiterer charakteristischer Punkte wie etwa Wendepunkt oder ähnliches ausgewertet werden. Es kann beispielsweise zur Charakterisierung dieses Profils die Zeit Δt bestimmt werden, die den Zeitabstand zwischen dem Maximum M und dem Nulldurchgang N angibt, also Δt = t_{N} - t_{M}. Auch kann die Zeit vom Start der Erregung in Form eines zeitlich variablen Stromflusses bis zum Wendepunkt zur Charakterisierung des Profils bestimmt werden. Es kann aber auch zusätzlich oder statt dessen die Antwort auf die Erregung zu vorzugsweise vorher bestimmten Zeiten, wie beispielsweise t₁ und t₂ bestimmt werden. Bereits aus den Vorzeichen der Antwort auf die Erregung zu bestimmten Zeiten kann in manchen Fällen eine Information über das Material des untersuchten Gegenstandes abgeleitet werden.

Der Verlauf der Antwort auf die Erregung kann auch statt eines Maximums ein Minimum aufweisen, wobei beispielsweise Δt sich aus der Zeitspanne zwischen dem Minimum und einem Nulldurchgang ergibt.

Neben der Bestimmung von Δt, wie in Figur 4g gezeigt, kann auch die Zeit vom Einsetzen der Erregung in Form eines zeitlich variablen Stromflusses bis zum Erreichen des Maximalwerts M bestimmt werden oder andere charakteristische Zeiten.

Auch der Absolutwert im Maximalpunkt der Antwort auf die Erregung, wie beispielsweise der Spannung U kann zur Auswertung der Antwort auf die Erregung berücksichtigt werden.

Auch ist es möglich, zu einer fest vorgegebenen Zeit nach dem Beginn der Erregung in Form eines zeitlich variablen Stromflusses oder zu mehrerer solcher Zeiten, die Antwort auf die Erregung zu bestimmen und aus den Absolutwerten dieser Antwort auf die Erregung oder aus dem Vorzeichen, das sich zu verschiedenen Zeiten ergibt, Rückschlüsse auf die Charakteristika des elektrisch leitfähigen Gegenstandes 30 zu ziehen. Alternativ können durch schnelle Fourier-Transformation (FFT) die Frequenz- und Phasenanteile der Antwort bestimmt und diese auf charakteristische Eigenschaften und Änderungen untersucht werden.

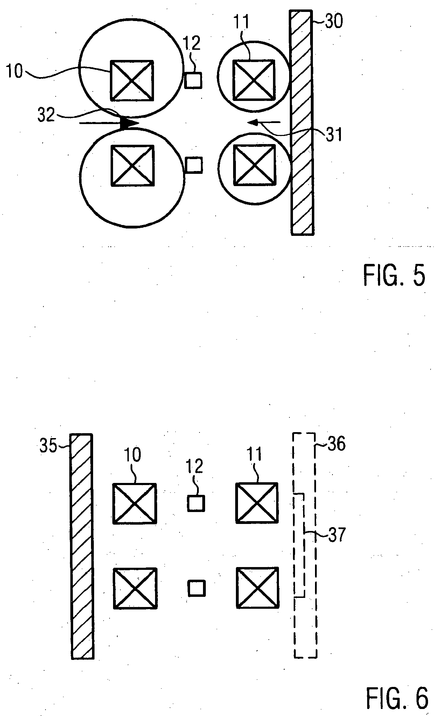

In Figur 5 ist dargestellt, dass das Magnetfeld 31 der Spule 11 durch das Vorhandensein eines zu detektierenden elektrisch leitfähigen Körpers 30 beeinflusst werden kann. Wie in Figur 5 dargestellt, ist der Pfeil 32 größer als der Pfeil 31. Der Pfeil 32 stellt das von der Spule 10 erzeugte magnetische Feld dar. Durch die unterschiedliche Beeinflussung der Magnetfelder 32 und 31 durch die Spulen 10 und 11 ergibt sich ein Symmetriebruch, der dazu führt, dass in der Spule 12 eine Antwort auf die Erregung erzeugt wird. Die erzeugte Antwort auf die Erregung in der Spule 12 weist typische Charakteristika (insbesondere charakteristische zeitliche Verläufe) auf, die auf die Beschaffenheit des Gegenstandes 30 schließen lassen.

Wie bereits vorher erwähnt, kann statt der Erzeugung der Magnetfelder durch die Spulen 10 und 11 das Magnetfeld auch durch die Spule 12 erzeugt werden, wobei dieses Magnetfeld aufgrund des Vorhandenseins des Gegenstandes 30 asymmetrisch ausfällt, so dass in der Spule 11 eine von der Spule 10 verschiedene Antwort auf die Erregung erzeugt wird, die bei entsprechender Verschaltung (siehe Figur 1a, 1b) nicht zu einer völligen Kompensation beziehungsweise Aufhebung der beiden Antworten auf die Erregung führt sondern vielmehr zu einer von Null verschiedenen Antwort auf die Erregung.

In Figur 6 ist die Vorrichtung 1 zur Detektion eines elektrisch leitfähigen Gegenstandes gezeigt, wobei ein Referenzgegenstand 35 links bei der Spulenanordnung vorgesehen ist. Wird ein identischer oder nahezu gleichartiger elektrisch leitfähiger Gegenstand 36 am rechten Ende der Spulenanordnung angeordnet, so ergibt sich bei Anlegen einer Erregung in Form eines zeitlich variablen Stromflusses an die Spulen 10 und 11 eine Antwort auf die Erregung durch die Spule 12, die sich zu Null ergibt. Wird jedoch ein andersartig elektrisch leitfähiger Gegenstand, wie beispielsweise durch die gestrichelte Linie 37 dargestellt, an die Spulenanordnung angelegt, so wird sich eine von Null verschiedene Antwort auf die Erregung ergeben, die darauf hinweist, das der zu detektierende elektrisch leitfähige Gegenstand nicht identisch oder ähnlich zu dem elektrisch leitfähigem Gegenstand 35 ist.

Durch die Vorgabe eines elektrisch leitfähigen Referenzgegenstandes 35 kann ein zu untersuchender elektrisch leitfähiger Gegenstand 36 auf eine Vielzahl von Charakteristika hin mit dem Referenzgegenstand verglichen werden. Jede Abweichung in der Materialzusammensetzung, Größe, Materialeigenschaft, Materialzustand, etc. führt zu einer von Null verschiedenen Antwort auf die Erregung. Bei Unterschieden der Gegenstände 35 und 36 können auch zeitlich charakteristische Verläufe der Antwort auf die Erregung auftreten. Die Antwort auf die Erregung kann auch Maxima und/oder Minima und/oder Nulldurchgänge oder Wendepunkte aufweisen und/oder Änderungen in der FFT oder Phasenanalyse, die erkannt und ausgewertet werden können, um den Unterschied zwischen den zwei Gegenständen zu quantifizieren. Dabei können sowohl Zeitabstände zwischen Maxima und oder Minima und/oder Nulldurchgänge und/oder Wendepunkten und/oder die Werte der Antwort auf die Erregung bei diesen Punkten und/oder die Werte der Antwort auf die Erregung zu vorherbestimmten Zeitpunkten ausgewertet werden. Auch die Zeit vom Auftreten eines Maximums/Minimums/Nulldurchgangs/Wendepunkts und/oder eines bestimmten Wertes der Antwort auf die Erregung ab dem Anlegen der Erregung in Form eines zeitlich variablen Stromflusses kann ausgewertet werden.

Sind die beiden Gegenstände 35 und 36 identisch und symmetrisch zu der Spulenanordnung angeordnet und sind die Spulen 35 identisch und symmetrisch angeordnet, so wird sich bei Anlegen einer Erregung in Form eines zeitlich variablen Stromflusses gleicher Amplitude an die beiden Spulen ein zeitlich durchgängiges Nullsignal geben. Jede Abweichung davon deutet dann auf einen Unterschied zwischen den beiden Gegenständen hin. Statt der Erzeugung eines Nullsignals kann die Spulenanordnung oder die Stromversorgung der Spulen so sein, dass sich auch bei identischen Gegenständen 35, 36 ein zeitlicher Verlauf der Antwort auf die Erregung ergibt, der von Null abweicht (Referenz). Jede weitere Abweichung von einer solchen Referenz einer erfassten Antwort auf die Erregung deutet dann aber auf eine Verschiedenheit der Gegenstände hin.

Durch den Vergleich von zwei Gegenständen 35, 36 ist eine Falschgeldprüfung von Münzen oder auch die Bestimmung eines Abnutzungsgrads oder Verschleißgrads von sich abnutzenden oder verschleißenden Gegenständen möglich. Damit können z.B. auch der Abnutzungsgrad von Elektrodenschweißkappen untersucht werden oder die Frage, ob sich Risse im Material der untersuchten Gegenstände befinden.

Wie vorab erwähnt, kann auch ein Messvorgang dadurch durchgeführt werden, dass der Strom an die Spule 12 gelegt wird, und die Antwort auf die Erregung, die sich in den Spulen 10 und 11 einstellt, ermittelt wird.

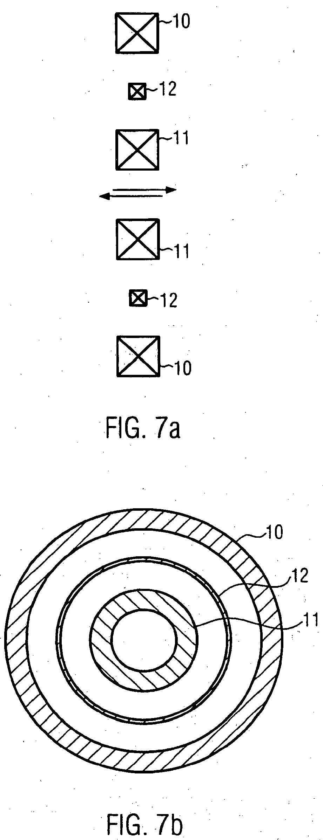

In Figur 7a und 7b ist eine alternative Bauform der Vorrichtung zur Detektion von elektrisch leitfähigen Gegenständen dargestellt, bei der die Spule 11 innerhalb der Spule 10 vorgesehen ist und die Spule 12 zwischen den Spulen 10 und 11 angeordnet ist. Die verschiedenen Spulen sind hierbei in einer radial nach außen laufenden Richtung hintereinander angeordnet. Die zweite und dritte Spule können hierbei ganz oder teilweise innerhalb des von der ersten Spule umgebenen Raumbereichs vorgesehen sein. Die Figur 7a zeigt einen Schnitt durch die in Fig. 7b in Draufsicht dargestellte Spulenanordnung.

Auch in dieser Konfiguration ist eine Detektion von elektrisch leitfähigen Gegenständen möglich mit denselben Unterscheidungsmöglichkeiten.

Die Spulen 10, 11 und 12 können in allen Figuren rund oder auch eckig sein, so dass eine Windung beispielsweise kreisförmig oder rechteckig oder quadratisch ausgebildet ist.

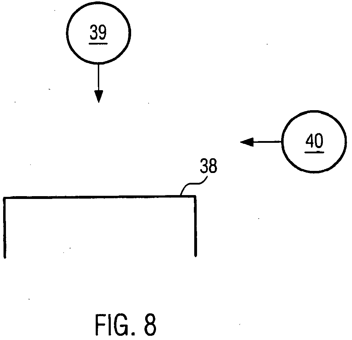

Figur 8 zeigt eine Sensorfläche 38 der Vorrichtung, an die elektrisch leitfähige Gegenstände 39 und 40 herangebracht werden können. Die Sensorfläche ist bevorzugt eine Frontfläche eines Gehäuses der Vorrichtung. Bei einer Betrachtung der Änderung(en) der Antwort auf die Erregung kann dann beispielsweise darauf rückgeschlossen werden, aus welcher Reichtung sich ein elektrisch leitfähiger Gegenstand der Sensorfläche nähert, ob er sich also frontal nähert wie Gegenstand 39 oder seitlich wie Gegenstand 40.

## Patentansprüche

1. Vorrichtung (1) zur Detektion von elektrisch leitfähigen Gegenständen,-umfassend
- eine Spulenanordnung mit entweder
a) einer ersten Spule (10) und einer zweiten Spule (11), die bei Erregung in Form eines zeitlich variablen Stromflusses gleichzeitig Magnetfelder (20, 21) mit entgegengesetzter Polung erzeugen, welche in einer im Bereich der entgegengesetzten Magnetfelder angeordneten dritten Spule (12) eine Antwort auf die Erregung erzeugen, oder
b) einer ersten Spule (10) und einer zweiten Spule (11), in welchen eine Erregung in einer dritten Spule (12) in Form eines zeitlich variablen Stromflusses eine Antwort auf die Erregung erzeugt, und
- eine Elektronik (25), die während und/oder nach der Versorgung der ersten Spule (10) und zweiten Spule (11) bzw. der dritten Spule (12) mit der Erregung in Form des zeitlich variablen Stromflusses die Antwort der dritten Spule (12) bzw. die Antwort der ersten Spule (10) und der zweiten Spule (11) auf die Erregung erfasst,
wobei der elektrisch leitfähige Gegenstand (30) bei Vorhandensein im Bereich des Magnetfelds ein detektierbares Signal in der erfassten Antwort erzeugt,
**dadurch gekennzeichnet,**
**dass** die Elektronik (25) so ausgebildet ist, dass sie den zeitlichen Verlauf der Antwort zu mehreren verschiedenen Zeiten während und/oder nach der Erregung erfasst und hierzu in dem zeitlichen Verlauf der Antworten den Zeitpunkt eines Maximums (M) und/oder eines Minimums und/oder eines Nulldurchgangs (N) und/oder eines Wendepunkts und/oder die Antwort zum Zeitpunkt des Maximums (M) und/oder des Minimums und/oder des Wendepunkts bestimmt und/oder die Antwort zu einem vorbestimmten Zeitpunkt nach Beginn der Erregung bestimmt.

2. Vorrichtung nach Anspruch 1, **dadurch gekennzeichnet, dass** die Erregung in Form des zeitlich variablen Stromflusses ein Pulspaket beliebiger Form oder eine reine Sinusform oder ein periodischer Puls oder ein Mehrfachpulspaket oder eine periodische Schwingungsform oder eine aperiodische Pulsfolge oder ein Rechteckpuls mit einer Dauer zwischen 0,1 ns und 1 ms ist.

3. Vorrichtung nach Anspruch 2, **dadurch gekennzeichnet, dass** der Rechteckpuls eine Dauer zwischen 1 µs und 50 µs hat.

4. Vorrichtung nach einem der Ansprüche 1 bis 3, **dadurch gekennzeichnet, dass** die jeweils durch die erste Spule (10) und die zweite Spule (11) erzeugte Antwort auf die Erregung in der dritten Spule (12) sich zumindest teilweise kompensieren, wobei bei nicht Vorhandensein eines zu detektierenden elektrisch leitfähigen Gegenstands (30) sich die Antwort auf die Erregung im wesentlichen zu Null ergibt
oder dass
die durch die dritte Spule (12) in der ersten und zweiten Spule (10, 11) erzeugte Antwort auf die Erregung so erfasst wird, dass diese beiden Antworten auf die Erregung sich zumindest teilweise kompensieren, wobei bei nicht vorhanden sein eines zu detektierenden elektrisch leitfähigen Gegenstands (30), die beiden Antworten auf die Erregung sich im wesentlichen zu Null ergänzen.

5. Vorrichtung nach Anspruch 4, **dadurch gekennzeichnet, dass** sich die durch die erste Spule (10) und die zweite Spule (11) erzeugten Antworten bzw. die in der ersten Spule (10) und der zweiten Spule (11) erzeugten Antworten zu mindestens 90 % oder 99 % kompensieren.

6. Vorrichtung nach einem der Ansprüche 1 bis 5, **dadurch gekennzeichnet, dass** im Bereich einer der ersten oder zweiten Spule (10, 11) ein metallisch leitfähiger Gegenstand (35) als Bestandteil der Vorrichtung vorgesehen ist, der ein Abgleichen der erzeugten Antwort auf die Erregung ermöglicht oder der einen Referenzgegenstand (35) vorgibt oder der den Einfluss einer Störkontur reduziert oder auf Null abgleicht.

7. Vorrichtung nach einem der Ansprüche 1 bis 6, **dadurch gekennzeichnet, dass** die erste und zweite Spule (10, 11) entweder eine gemeinsame Achse aufweisen, die mit der Achse der dritten Spule (13) zusammenfällt, oder dass die Achse der dritten Spule (13) parallel versetzt oder nicht parallel zu einer gemeinsamen Achse oder den Achsen der ersten und der zweiten Spule (10, 11) liegt.

8. Vorrichtung nach Anspruch 7, **dadurch gekennzeichnet, dass** bei gemeinsamer Achse der ersten und zweiten Spule (10, 11) die dritte Spule (13) mittig zwischen der ersten und zweiten Spule (10, 11) angeordnet ist.

9. Vorrichtung nach einem der Ansprüche 1 bis 8, **dadurch gekennzeichnet, dass** eine oder mehrere weitere Spulen vorgesehen sind, die auf die Erregung hin erzeugte Antwort Einfluss nehmen.

10. Vorrichtung nach einem der Ansprüche 1 bis 9, **dadurch gekennzeichnet, dass** die Vorrichtung einen Metallgehäuseteil oder ein Vollmetallgehäuse (29) umfasst, wobei das Vollmetallgehäuse (29) zumindest die erste, zweite und dritte Spule umschließt, wobei der Metallgehäuseteil oder das Vollmetallgehäuse Buntmetall oder Edelstahl umfasst, bzw. daraus gefertigt ist.

11. Vorrichtung nach Anspruch 10, **dadurch gekennzeichnet, dass** das Vollmetallgehäuse (29) einen Teil der Elektronik (25) oder die ganze Elektronik (29) umschließt.

12. Vorrichtung nach einem der Ansprüche 1 bis 11, **dadurch gekennzeichnet, dass** die Vorrichtung als Näherungsschalter oder als Vorrichtung zur Erkennung von verschiedenen Materialien, als Münzerkennung oder als Vorrichtung zum Erfassen eines Abnutzungs- oder Verschleißgrades oder zum Erkennen von Legierungen oder Fehlstellen wie beispielsweise Rissen, ausgebildet ist.

13. Vorrichtung nach einem der Ansprüche 1 bis 12, **dadurch gekennzeichnet, dass** Änderungen eines Antwortsignals erfasst werden, wobei durch die bestimmte Charakteristik dieser Änderung Materialfehler erkennbar sind.

14. Vorrichtung nach einem der Ansprüche 1 bis 13, **dadurch gekennzeichnet, dass** die Elektronik (25) die Antwort auf die Erregung zu vorgegebenen charakteristischen Zeitpunkten erfasst, die gemessenen Werte auswertet und das Ergebnis ausgibt.

15. Vorrichtung nach einem der Ansprüche 1 bis 14, **dadurch gekennzeichnet, dass** die Elektronik durch schnelle Fourier-Transformation (FFT) charakteristische Änderungen in der Frequenz- und/oder Phasen - Information der Antwort, bestimmten Materialarten zuordnet.

## Claims

1. Device (1) for detecting electrically conductive objects, comprising
- a coil arrangement with either
a) a first coil (10) and a second coil (11) which, when they are excited in the form of a temporally variable flow of current, simultaneously generate magnetic fields (20, 21) having opposite polarity, which produce a response to the excitation in a third coil (12) arranged in the region of the opposite magnetic fields, or
b) a first coil (10) and a second coil (11) in which an excitation in a third coil (12) in the form of the temporally variable flow of current produces a response to the excitation, and
- an electronics unit (25) which while and/or after the first coil (10) and the second coil (11) or the third coil (12) are supplied with the excitation in the form of a temporally variable flow of current detects the response of the third coil (12) or the response of the first coil (10) and the second coil (11) to the excitation,
wherein the electrically conductive object (30) generates a detectable signal in the detected response when said object is in the region of the magnetic field,
**characterized by**
the electronic system (25) being adapted such that it detects the behavior of the generated response to the excitation over time at several different times during and/or after excitation and that it determines in the responses over time the point in time of a maximum (M) and/or of a minimum and/or of a zero crossing (N) and/or of an inflection point and/or the response at the time of the maximum (M) and/or the minimum and/or the inflection point and/or the response at a predetermined point in time after the beginning of excitation.

2. Device according to claim 1, **characterized by** the excitation in the form of a temporally variable flow of current being a pulse bundle of any form or a pure sine wave form or a periodic pulse or a multiple-pulse bundle or a periodic mode of oscillation or an aperiodic pulse repetition or a square wave having a duration between 0.1 ns and 1 ms.

3. Device according to claim 2, **characterized by** the square wave pulse having a duration between 1 µs and 50 µs.

4. Device according to one of claims 1 to 3, **characterized by** each response generated by the first coil (10) and the second coil (11) to the excitation in the third coil (12) being compensated at least in part, the response to the excitation being substantially zero when an electrically conductive object (30) is not present
or by
the response to the excitation generated by the third coil (12) in the first and the second coil (10, 11) being detected such that said two responses to the excitation are compensated at least in part, the two responses to the excitation preferably adding up to substantially zero when an electrically conductive object (30) to be detected is not present.

5. Device according to claim 4, **characterized in that** the responses generated by the first coil (10) and the second coil (11) or the responses generated in the first coil (10) and in the second coil (11) are compensated to at least 90 % or 99%.

6. Device according to one of claims 1 to 5, **characterized in that** a metallically conductive object (35) is provided in the region of one of the first or second coil (10, 11), as a component of the device, allowing an adjustment of the generated response to the excitation or specifying a reference object (35) or reducing the influence of an interference contour or adjusting it to zero.

7. Device according to one of claims 1 to 6, **characterized in that** the first and the second coil (10, 11) either have a common axis, the axis of which coils coincides with the axis of the third coil (13), or **in that** the axis of the third coil (13) is offset parallel or not parallel to the common axis or to the axes of the first and second coil (10, 11).

8. Device according to claim 7, **characterized in that** in the case of a common axis of the first and the second coil (10, 11) the third coil (13) is arranged centrally between the first and the second coil (10, 11).

9. Device according to one of claims 1 to 8, **characterized in that** one or several further coils are provided which can influence the generated response to the excitation.

10. Device according to one of claims 1 to 9, **characterized in that** the device comprises a metal housing part or a full metal housing (29), the full metal housing (29) enclosing at least the first, second and third coils, the metal housing part or the full metal housing comprising or being produced from nonferrous heavy metal or high-grade steel.

11. Device according to claim 10, **characterized in that** the full metal housing (29) encloses part of the electronics unit (25) or the entire electronics unit (29).

12. Device according to any of claims 1 to 11, **characterized in that** the device is configured as a proximity switch or as a device for identifying different materials, as a coin identification system or as a device for detecting the degree of wear or for identifying alloys or defects such as fissures.

13. Device according to any of claims 1 to 12, **characterized in that** changes in a received signal can be detected, it being possible for material defects to be identified by the particular characteristics of this change.

14. Device according to any of claims 1 to 13, **characterized in that** the electronics unit (25) detects the response to the excitation at preferably predetermined characteristic points in time, and evaluates the measured values and outputs the result.

15. Device according to any of claims 1 to 14, **characterized in that** the electronics unit assigns certain material types to characteristic changes in the frequency and/or phase information of the response by means of a fast Fourier transform (FFT).

## Revendications

1. Dispositif (1) pour détecter des objets conducteurs d'électricité, comprenant
- un arrangement de bobine avec, ou
a) une première bobine (10) et une deuxième bobine (11) qui, lorsqu'elles sont excitées sous forme d'un fluxe de courant variable dans le temps, génèrent simultanément des champs magnétiques (20, 21) avec une polarité opposée, produisant une réponse à l'excitation dans une troisième bobine (12) arrangée dans la région des champs magnétiques opposés, ou
b) une première bobine (10) et une deuxième bobine (11) dans lesquelles l'excitation dans une troisième bobine (12) sous forme d'un fluxe de courant variable dans le temps produit une réponse à l'excitation, et
- une unité électronique (25) qui pendant et/ou après que la première bobine (10) et la deuxième bobine (11) ou la troisième bobine (12) sont fournies avec l'excitation sous forme d'un fluxe de courant variable dans le temps, détecte la réponse de la troisième bobine (12) ou la réponse de la première bobine (10) et de la deuxième bobine (11) à l'excitation,
l'objet conducteur d'électricité (30) générant un signal détectable dans la réponse détectée quand l'objet est dans la région du champs magnétique,
**caractérisée par**
l'unité électronique (25) étant adaptée de manière à ce qu'il détecte le comportement de la réponse générée à l'excitation dans le temps à des moments différents pendant et/ou après l'excitation et qu'il détermine dans les réponses dans le temps le moment d'un maximum (M) et /ou d'un minimum et/ou d'un passage par zéro (N) et/ou d'un point d'inflexion et/ou la réponse au moment du maximum (M) et/ou du minimum et/ou du point d'inflexion et/ou la réponse à un moment prédéterminé dans le temps après le début de l'excitation.

2. Dispositif selon la revendication 1, **caractérisé par** l'excitation sous forme d'un fluxe de courant variable dans le temps étant un paquet d'impulsions sous quelque forme que ce soit ou une forme sinusoïdale pure ou une impulsion périodique ou un paquet de plusieurs impulsions ou un mode périodique d'oscillation ou une répétition d'impulsions apériodique ou une impulsion rectangulaire avec une durée entre 0,1 ns et 1 ms.

3. Dispositif selon la revendication 2, **caractérisé par** l'impulsion rectangulaire ayant une durée entre 1 µs et 50 µs.

4. Dispositif selon une des revendications 1 à 3, **caractérisé par** chaque réponse générée par la première bobine (10) et la deuxième bobine (11) à l'excitation dans la troisième bobine (12) étant compensée, au moins partiellement, la réponse à l'excitation étant essentiellement zéro quand un objet conducteur d'électricité (30) n'est pas présent
ou par
la réponse générée par la troisième bobine (12) dans la première et la deuxième bobine (10, 11) à l'excitation étant détectée de manière à ce que ces deux réponses à l'excitation sont compensées au moins partiellement, les deux réponses à l'excitation s'additionnant de préférence essentiellement à zéro quand un objet conducteur d'électricité (30) à détecter n'est pas présent.

5. Dispositif selon la revendication 4, **caractérisé par** les réponses générées par la première bobine (10) et la deuxième bobine (11) ou les réponses générées dans la première bobine (10) et la deuxième bobine (11) étant compensées à au moins 90 % ou 99 %.

6. Dispositif selon une des revendications 1 à 5, **caractérisé par** un objet conducteur métallique (35) étant prévu dans la région d'une de la première ou la deuxième bobine (10, 11) comme composante du dispositif, permettant une adaptation de la réponse générée à l'excitation ou spécifiant un objet de référence (35) ou réduisant l'influence d'un contour d'interférence ou le mettant à zéro.

7. Dispositif selon une des revendications 1 à 6, **caractérisé par** la première et la deuxième bobine (10, 11) ayant ou un axe commun, coincidant avec l'axe de la troisième bobine (13), ou par l'axe de la troisième bobine (13) étant décalé en parallèle ou non pas parallèle à l'axe commun ou aux axes de deux la première et de la deuxième bobine (10, 11).

8. Dispositif selon la revendication 7, **caractérisé par** la troisième bobine (13) étant disposée centralement entre la première et la deuxième bobine (10, 11) dans le cas d'un axe commun de la première et la deuxième bobine (10, 11).

9. Dispositif selon une des revendications 1 à 8, **caractérisé par** une ou plusieurs bobines supplémentaires étant prévues qui peuvent influencer la réponse générée à l'excitation.

10. Dispositif selon une des revendications 1 à 9, **caractérisé par** le dispositif comprenant une portion de boîtier métallique ou un boîtier entier métallique (29), le boîtier entier métallique (29) enfermant au moins les premières, deuxièmes et troisièmes bobines, la portion de boîtier métallique ou le boîtier entier métallique comprenant ou étant produit de métal lourd non ferreux ou d'acier inoxydable.

11. Dispositif selon une des revendications 1 à 10, **caractérisé par** le boîtier entier métallique (29) entourant une partie de l'unité électronique (25) ou l'unité électronique (29) entière.

12. Dispositif selon la revendication 10, **caractérisé par** le dispositif étant configuré comme détecteur de proximité ou comme un dispositif pour identifier des matériaux différents, comme système d'identification des pièces ou comme un dispositif pour détecter un degré d'usure ou pour identifier des alliages ou des imperfections, comme par exemple des fissures.

13. Dispositif selon une des revendications 1 à 12, **caractérisé par** des modifications d'un signal reçu pouvant être détectées, et des défauts de matériau pouvant être identifiés par les caractéristiques particuliers de cette modification.

14. Dispositif selon une des revendications 1 à 13, **caractérisé par** l'unité électronique (25) détectant la réponse à l'excitation à des moments caractéristiques prédéterminés, évaluant les valeurs mesurées et indiquant le résultat.

15. Dispositif selon une des revendications 1 à 14, **caractérisé par** l'unité électronique associant des changements caractéristiques de la fréquence et/ou de l'information de phase de la réponse à des types particuliers de matériau par transformation de Fourier rapide (FFT).
